# EUROPÄISCHE PATENTSCHRIFT

(11) **EP 1 914 662 B1**
(45) Veröffentlichungstag und Bekanntmachung des Hinweises auf die Patenterteilung: **23.11.2011**
(21) Anmeldenummer: 07019952.6
(22) Anmeldetag: 11.10.2007
(51) Int. Cl.: G06K 7/00

(54) **RFID-System und RFID-Verfahren**
RFID system and RFID method
Système RFID et procédé RFID

(30) Priorität: 20.10.2006 DE 102006049579
(43) Veröffentlichungstag der Anmeldung: 23.04.2008
(73) Patentinhaber: Cavea Identification GmbH, 82140 Olching (DE)
(72) Erfinder: Angerer, Franz, 84453 Mühldorf (DE)
(74) Vertreter: Roos, Peter

(56) Entgegenhaltungen:
- EP-A- 0 512 543
- EP-A- 0 936 045
- EP-A- 1 667 336
- WO-A-99/30902

## Beschreibung

Die vorliegende Erfindung betrifft RFID-Systeme sowie RIFD-Verfahren. Die RFID ("radio frequency identification") ist eine Technik zur drahtlosen Identifikation von Objekten, die seit geraumer Zeit im Bereich der so genannten Auto-lD, also der automatischen Bereitstellung von Informationen zu Personen, Tieren, Gütern und Waren eingesetzt wird.

Jedes Auto-ID-System basiert auf der Verwendung künstlicher Identifikationsmerkmale zur Ermöglichung einer maschinengerechten Identifizierung. Die heute noch weit verbreiteten Barcode-Etiketten, die schon vor vielen Jahren den Bereich der Auto-ID revolutionierten, werden für gegenwärtig an Bedeutung gewinnende Anwendungsfälle zunehmend uninteressant. Nachteilig bei Barcodes ist oftmals deren geringe Speicherkapazität für Informationen, die zudem auch nicht nachträglich verändert werden können. Außerdem ist das Auslesen bzw. Ablesen ("Scannen") von Daten relativ umständlich und zeitaufwändig (Sichtkontakt erforderlich).

Diese Nachteile können mit der RFID beseitigt werden. Daher ist davon auszugehen, dass RFID-Systeme und -Verfahren in Zukunft z. B. Barcodes in vielen Anwendungsfällen ersetzen werden und darüber hinaus durch deren Einsetzbarkeit in ganz neuen Anwendungsfällen den Bereich der Auto-ID in ähnlicher Weise revulotionieren werden.

RFID-Systeme und -Verfahren sind in großer Vielfalt an sich bekannt. Lediglich beispielhaft sei hierzu verwiesen auf das "RFID-Handbuch", 3. Auflage, Klaus Finkenzeller, Carl Hanser Verlag München Wien, 2002.

Ein RFID-System besteht aus zumindest einem Lesegerät zum Auslesen von Daten, die in einem Transponder gespeichert sind, wobei die Datenübertragung zwischen Transponder und Lesegerät mittels elektromagnetischer Wellen stattfindet. Bei niedrigeren Frequenzen geschieht dies induktiv über das Nahfeld, bei höheren Frequenzen über das elektromagnetische Fernfeld. Das Lesegerät kann wie auch der Transponder sowohl als Sender als auch Empfänger für die elektromagnetische Strahlung fungieren. Induktiv gekoppelte Systeme besitzen eine vergleichsweise geringe Reichweite. Typische Vertreter dieser Variante sind z. B. kontaktlose Chipkarten und automatische Zugangssysteme. Demgegenüber besitzen Systeme mit elektromagnetischer Fernfeldkopplung eine vergleichsweise große Reichweite. Die vorliegende Erfindung bezieht sich speziell auf diese Gruppe von RFID-Systemen bzw. -Verfahren. Gängige Frequenzen der RFID-Systeme mit Fernfeldkopplung liegen in der Größenordnung von einigen hundert MHz. Gesetzlich sind oftmals ganz bestimmte Frequenzbereiche vorgeschrieben, wie z. B. 865-869,5 MHz oder 2,45 GHz.

Bei den Transpondern, die z. B. in Form von Etiketten oder dergleichen insbesondere an Gütern oder Waren angebracht oder in deren Verpackung integriert sein können, unterscheidet man verschiedene Arten:
Aktive Transponder besitzen eine eigene Energieversorgung, z. B. in Form einer Batterie.
Passive Transponder nutzen hingegen die Strahlungsenergie eines RFID-Senders (der z. B. im Lesegerät integriert sein kann) zum Senden der eigenen Information an das Lesegerät. Die Erfindung ist insbesondere für diese Art von Transpondern sehr vorteilhaft einsetzbar.

Eine Mischform stellen so genannte semi-passive Transponder dar, die z. B. lediglich mit einer schwachen Stützbatterie ausgestattet sind, die zum Senden der eigenen Information genutzt wird, sobald der Transponder durch das RFID-System (z. B. durch das Lesegerät) "aus dem Schlaf geweckt" worden ist.

Bei den gegenwärtig im Einsatz befindlichen RFID-Systemen und -Verfahren ergibt sich in der Praxis eine Vielzahl von Problemen, welche die Nutzung der RFID-Technologie in manchen Anwendungsbereichen erschweren wenn nicht unmöglich machen.

Eine erste Reihe von Problemen betrifft die Zuverlässigkeit der Technologie. Diesbezüglich besteht der Wunsch, sämtliche im Erfassungsbereich des jeweiligen Lesegeräts befindliche Transponder zu identifizieren und in diesen Transpondern gespeicherte Daten fehlerfrei auszulesen (und gegebenenfalls fehlerfrei zu verändern). Dies wird in der Praxis jedoch z. B. durch Interferenzen mehrerer RFID-Lesegeräte untereinander, Störungen durch spontane Funkemissionen in der Umgebung, Störungen durch andere Funkgeräte und manchmal durch eine Sabotage durch Störsender verhindert.

Einen weiteren Problemkreis stellt die Datensicherheit dar. Diesbezüglich besteht z. B. die Gefahr eines Abhörens der Datenkommunikation und die Gefahr eines Vortäuschens von Information. Die Kommunikation zwischen einem RFID-Lesegerät und Transpondern ist im Wesentlichen einer normalen Funkverbindung zwischen einem Sender und einem Empfänger vergleichbar. Ein externer Lauscher kann einzelne Bitmuster mithören, fälschen, vorspielen oder den Empfänger durch eine Überhäufung von Information ähnlich einem so genannten Denial-of-Service (DoS)-Angriff betriebsunfähig machen. Besonders paradox wird die Situation in Anbetracht der Tatsache, dass RFID von vielen namenhaften Herstellern zum Plagiatschutz eingesetzt werden soll. Lauschangriffe und Einspielen von gefälschten Informationen von außen sind hier vorprogrammiert.

Die beiden vorstehend erläuterten Problemkreise haben in der Vergangenheit dazu geführt, dass RFID-Systeme immer komplexer wurden, einen hohen Implementationsaufwand erfordern, also letztlich die Kosten für Implementation und Betrieb sich tendenziell vergrößert haben.

Aus der EP 0 512 543 A2 ist ein RFID-System und ein RFID-Verfahren bekannt, bei welchen ein RFID-Erfassungsbereich durch eine Strahlungsabschirmung begrenzt wird, um eine Einwirkung der elektromagnetischen Strahlung auf in der Nähe befindliche Personen zu reduzieren. Die Abschirmuns kann die elekho magnetische sfrahlun in den Erfassungsbeich zurrichreflehtieren. Das zum Identifizieren einzelner Transponder verwendete Lesegerät ist unter Berücksichtigung von gesetzlichen Vorgaben hinsichtlich der Strahlungsleistung und Strahlungsfrequenz (gleichbedeutend Strahlungswellenlänge) ausgebildet. Bei diesem Stand der Technik geht es um eine automatische Sortierung einzelner Postpakete, die jeweils mit einem Transponder versehen sind und in einem gewissen gegenseitigen Mindestabstand durch den Erfassungsbereich des RFID-Systems hindurchgefördert werden, so dass sich stets nur ein einziger Transponder im Erfassungsbereich befindet.

Aus der EP 1 667 336 A1 ist ein RFID-System mit einem Lesegerät zur Kommunikation mit einem RFID-Transponder bekannt. Dieses bekannte System wird innerhalb eines Gerätes betrieben, mittels welchem eine Vielzahl von Transpondern, die an einem quasiendlosen Band angeordnet sind, der Reihe nach individualisiert werden, indem diese individuell bedruckt werden und mittels des Lesegerätes mit individuellen informationen versehen werden.

Beim Betrieb von mehreren RFID-Systemen in enger räumlicher Nachbarschaft kann es hinsichtlich der Zuverlässigkeit der Erfassung wie oben bereits erwähnt zu Problemen insbesondere aufgrund von Interferenzen der mehreren RFID-Lesegeräte kommen.

Es ist eine Aufgabe der vorliegenden Erfindung, bei in enger räumlicher Nachbarschaft betriebenen RFID-Systemen die Zuverlässigkeit der Erfassung in einfacher Weise zu verbessern.

Diese Aufgabe wird gemäß der Erfindung durch eine RFID-Systemanordnung nach Anspruch 1 bzw. ein RFID-Verfahren nach Anspruch 10 gelöst. Die abhängigen Ansprüche sind auf vorteilhafte Weiterbildungen der Erfindung gerichtet.

Bei der erfindungsgemäßen RFID-Systemanordnung ist der jeweilige Erfassungsbereich der Lesegeräte jeweils durch eine Abschirmung begrenzt, so dass die Zuverlässigkeit jedes einzelnen Systems jeweils beträchtlich verbessert werden kann, ohne die Systeme nennenswert zu verkomplizieren.

Mit der Abschirmung wird einerseits eine mehr oder weniger große Unempfindlichkeit des Identifizierungsprozesses innerhalb jedes einzelnen RFID-Systems gegenüber externen Störstrahlungen geschaffen und andererseits die Möglichkeit für Angriffe von außen (z. B. Sabotage, Abhören, Einspielen von Falschinformation) beträchtlich verringert oder sogar ausgeschlossen. Für die technische Realisierung der Abschirmung stehen dem Fachmann vorteilhaft eine Vielzahl von Möglichkeiten zur Verfügung.

In einer bevorzugten Ausführungsform umgibt die Abschirmung den Erfassungsbereich größtenteils, insbesondere im Wesentlichen vollständig.

In einer Ausführungsform ist die Abschirmung derart ausgebildet, dass diese mindestens 50 %, insbesondere mindestens 60 % einer Strahlungsleistung des Systems absorbiert.

In den meisten Ländern unterliegen RFID-Systeme als funktechnische Anlagen sehr restriktiven gesetzlichen Vorschriften. Diese Vorschriften können sich z. B. auf die verwendeten Frequenzen der elektromagnetischen Strahlung und/oder die Leistung beziehen, mit welcher der oder die Sender des Systems betrieben werden. In dieser Hinsicht besteht ein überraschender Vorteil der Erfindung darin, dass das RFID-System je nach Ausführung praktisch unabhängig von solchen gesetzlichen Vorschriften betrieben werden kann. Vorteilhaft lässt sich ein solches System weltweit an jedem Ort, zu jeder Zeit und mit beliebiger Funkwellenlänge und -leistung realisieren.

In einer Ausführungsform ist vorgesehen, dass eine Strahlungswellenlänge des Systems in einem Bereich von 0,8 bis 8 GHz liegt.

In einer Ausführungsform ist vorgesehen, dass eine Strahlungswellenlänge des Systems in einem Bereich liegt, der für den Betrieb von funktechnischen Anlagen gesetzlich untersagt ist.

In einer bevorzugten Ausführungsform ist eine Strahlungsleistung des Systems so groß bemessen, dass der Betrieb des Systems ohne die Abschirmung gesetzlich untersagt wäre. Diese Strahlungsleistung kann z. B. um mindestens einen Faktor 2, insbesondere um mindestens einen Faktor 5 größer als die (ohne Abschirmung) zulässige Strahlungsleistung sein.

Ferner ist gemäß der Erfindung vorgesehen, dass die RFID-Sendeleistung der Lesegeräte jeweils wenigstens 5 W, beispielsweise sogar wenigstens 10 W beträgt, jedoch beim Austritt aus dem Erfassungsbereich durch die Abschirmung um mindestens 60 % gedämpft wird.

Neben einer erhöhten Sendeleistung jenseits der einschlägigen Norm (für bessere RFID-Leseergebnisse) kommt vorteilhaft auch die Möglichkeit in Betracht, RFID-Sende- und Lesegeräte einfacher, billiger und robuster hinsichtlich ihres HF-technischen Aufbaus vorzusehen.

In an sich bekannter Weise kommt als Abschirmung eine flächig ausgedehnte, elektrisch leitfähige Materialschicht z. B. ein Metallblech oder eine Metallfolie in Betracht. Für die meisten der hier besonders interessierenden Anwendungsfälle bzw. Strahlungswellenlängen kann im Rahmen der Erfindung jedoch vorteilhaft das Prinzip des "Faraday-Käfigs" genutzt werden und die Abschirmung aus einer elektrisch leitfähigen Gitter- bzw. Netzstruktur gebildet werden.

Eine solche Gitter- bzw. Netzstruktur kann vorteilhaft mit vergleichsweise einfachen, insbesondere sogar handelsüblichen Materialien realisiert werden. In einer Ausführungsform umfasst die Struktur z. B. Metallstangen und/oder gelochtes Metallblech und/oder Maschendraht und/oder Drahtgeflecht. Beispielsweise können zur Bildung eines Abschirmmoduls einzelne mit Maschendraht bespannte Elemente (z. B. Metallrahmen) in variabler Größe vorgefertigt werden.

Insbesondere mit den vorstehend genannten Abschirmungskomponenten lassen sich Abschirmungswände oder ganze Abschirmungskäfige unterschiedlicher Größe modular, aus vorgefertigten Teilen, zusammensetzen.

Bei Verwendung einer nicht flächig durchgehend elektrisch leitfähigen Abschirmungskomponente sondern einer Gitter- bzw. Netzstruktur ist ein charakteristischer Strukturabstand (z. B. der gegenseitige Abstand von Metallstangen, die Maschenweite eines Maschendrahts oder ein Lochdurchmesser eines gelochten Metalls) bevorzugt um mindestens einen Faktor 2, insbesondere um mindestens einen Faktor 5 kleiner als die Wellenlänge einer elektromagnetischen Strahlung des Systems bemessen. Für eine Frequenz von etwa 870 MHz, entsprechend einer Wellenlänge von etwa 30 cm, ergibt sich damit z. B. ein charakteristischer Abstand (z. B. Maschenweite) von etwa 15 cm oder weniger (z. B. 3 cm).

In einer Ausführungsform ist vorgesehen, dass die Abschirmung mehrere hintereinander angeordnete Abschirmlagen umfasst, z. B. zwei oder drei Gitter- bzw. Netzstrukturen der vorstehend genannten Art. Ein solcher mehrlagiger Abschirmungsaufbau ermöglicht z. B. eine vergrößerte Absorption von Strahlungsleistung im Abschirmmaterial. Die mehreren Abschirmlagen können hierbei gleichartig oder verschiedenartig (z. B. mit verschiedenem charakteristischen Abstand wie z. B. Maschenweite) vorgesehen sein.

Im Rahmen der vorliegenden Erfindung kommt einem mehrlagigen Aufbau der Abschirmung bzw. einzelner Abschirmkomponenten jedoch noch eine ganz andere, wesentliche Bedeutung zu: Wenn der gegenseitige Abstand von hintereinander angeordneten Abschirmlagen etwa in der Größenordnung der betreffenden Strahlungswellenlänge liegt, was bei den hier besonders interessierenden Anwendungsfällen ohne weiteres bewerkstelligt werden kann, so lässt sich die Abschirmungswirkung in gezielter Weise durch Wahl eines bestimmten gegenseitigen Abstands drastisch verändern. Je nach konkreter Bemessung dieses gegenseitigen Abstands können an den verschiedenen Abschirmlagen reflektierte elektromagnetische Wellen z. B. destruktiv oder konstruktiv interferieren. Im ersten Fall ergibt sich eine minimale Reflektion und maximale Absorption, wohingegen im zweiten Fall die Abschirmwirkung einen maximalen Reflektionsanteil beinhaltet. Die Dämpfung, d. h. die Verringerung der Strahlungsleistung auf Grund des Durchtritts durch die Abschirmung bleibt davon unberührt.

Eine maximale Reflektion kann z. B. dann sinnvoll sein, wenn man innerhalb eines durch die Abschirmung begrenzten Erfassungsbereichs funktechnisch betrachtet keine "toten Winkel" haben möchte, so dass besonders zuverlässig alle im Erfassungsbereich befindlichen Transponder identifiziert werden können.

Der Begriff "Identifikation" (von Transpondern) ist im Sinne der vorliegenden Erfindung sehr breit zu verstehen und soll alle Arten von Informations- und/oder Datenübertragung vom Transponder zum Lesegerät umfassen. Im einfachsten Fall handelt es sich z. B. um eine "1 Bit-Information" (Transponder im Erfassungsbereich oder nicht). Von größerer praktischer Bedeutung sind jedoch komplexere Daten, die im Bereich des Transponders gespeichert sind und wenigstens teilweise ausgelesen werden (z. B. so genannter EAN-Code einer Ware oder "tracking code" eines Produkts im Produktions-Materialfluss). Dabei ist es keineswegs ausgeschlossen und oftmals sogar bevorzugt, dass während des "Identifikationsprozesses" auch eine Informations- bzw. Datenübertragung in umgekehrter Richtung erfolgt.

Im Gegensatz dazu kann es Fälle geben, beispielsweise wenn die Strahlungsleistung eines Lesegeräts exakt auf die Antenne des Transponders angepasst bzw. abgestimmt werden soll, in denen eine möglichst große Absorption von Sendeleistung in der Abschirmung zweckmäßig ist.

In einer Ausführungsform ist vorgesehen, dass wenigstens ein Teil der Abschirmung als ein Tor ausgebildet ist, welches in einer Öffnungsstellung ein Einbringen und Ausbringen von mit Transpondern versehenen Gegenständen gestattet und welches in einer Schließstellung abschirmt.

Der Begriff "Tor" ist hierbei sehr breit zu verstehen und umfasst beispielsweise plattenartige bzw. türartige bewegbare Abschirmkomponenten wie z. B. schwenkbare Türen, Schiebetüren, Schwingtüren, aber z. B. auch Rolltore, Rollos, Falttore etc. Als torartig ausgebildeter Abschirmungsteil können außerdem z. B. folgende Konstruktionen verwendet werden: Metallbeschichtetes Lamellenrolltor, das automatisch geöffnet und geschlossen wird; Lamellenvorhang aus metallbeschichtetem Kunststoff (oder kunststoffbeschichtetem Metall); Schwingtüren aus Maschendrahtelementen; (Lamellen-)Vorhang mit eingewebtem Drahtnetz etc.

In einer Weiterbildung sind wenigstens zwei Tore vorgesehen, von welchen eines zum Einbringen und ein anderes zum Ausbringen der Gegenstände vorgesehen ist.

Eine besonders bevorzugte Verwendung der erfindungsgemäßen RFID-Systemanordnung bzw. des erfindungsgemäßen RFID-Verfahrens ist die automatische Identifikation von Gütern oder Waren, insbesondere z. B. im Bereich der Beschaffungs- und Distributionslogistik, im Handel, in Produktionsbetrieben oder anderen Materialflusssystemen.

Vorteilhaft lässt sich die Erfindung in die Fördertechnik im Bereich Produktion und/oder Logistik integrieren und kann in jeweils speziell angepassten Varianten eingesetzt werden (z. B. auch im Transportwesen).

Ein im Rahmen der Erfindung verwendetes RFID-System kann z. B. in einem Fahrzeug ausgebildet sein. Bevorzugt befindet sich hierbei der Erfassungsbereich des RFID-Systems innerhalb eines Laderaums des Fahrzeugs bzw. bildet diesen Laderaum. Ein wesentlicher Vorteil dieser Ausführung besteht darin, dass eine RFID-Erfassung auch während eines Transports der betreffenden Gegenstände, insbesondere Waren, im Fahrzeug durchgeführt werden kann.

Bei dem Fahrzeug kann es sich z. B. um einen LKW handeln. Bei einem LKW von herkömmlicher Bauart kann z. B. der quaderförmige Laderaum als Erfassungsbereich eines RFID-Systems genutzt werden, indem eine LKW-Plane mit abschirmender Wirkung verwendet wird (z. B. Plane mit eingewebtem Drahtgeflecht). Auch könnte der Laderaum des betreffenden Fahrzeugs, insbesondere LKW, z. B. mit Abschirmteilen bzw. Abschirmmodulen ausgekleidet werden.

Die Erfindung wird nachfolgend anhand von Ausführungsbeispielen mit Bezug auf die beigefügten Zeichnungen weiter beschrieben. Es stellen dar:
- Fig. 1 bis 6: ist eine Darstellung zur Veranschaulichung eines störungsfreien RFID- Verfahrens in einem RFID-System gemäß eines ersten Ausführungs- beispiels,
- Fig. 7 bis 12: ist eine entsprechende Darstellung für ein modifiziertes RFID-System gemäß eines zweiten Ausführungsbeispiels,
- Fig. 13 bis 15: ist eine entsprechende Darstellung eines RFID-Systems gemäß eines dritten Ausführungsbeispiels,
- Fig. 16: zeigt ein viertes Ausführungsbeispiel eines RFID-Systems,
- Fig. 17: zeigt ein weiter modifiziertes, fünftes Ausführungsbeispiel eines RFID- Systems,
- Fig. 18 und 19: sind Darstellungen zur Veranschaulichung einer Abschirmung mit vor- wiegend absorbierender Abschirmwirkung (Fig. 18) bzw. vorwiegend re- flektierender Abschirmwirkung (Fig. 19),
- Fig. 20 bis 25: sind Darstellungen zur Veranschaulichung verschiedener technischer Realisierungen der Abschirmwirkung,
- Fig. 26: zeigt ein sechstes Ausführungsbeispiel eines RFID-Systems, und
- Fig. 27: zeigt ein siebtes Ausführungsbeispiels eines RFID-Systems.

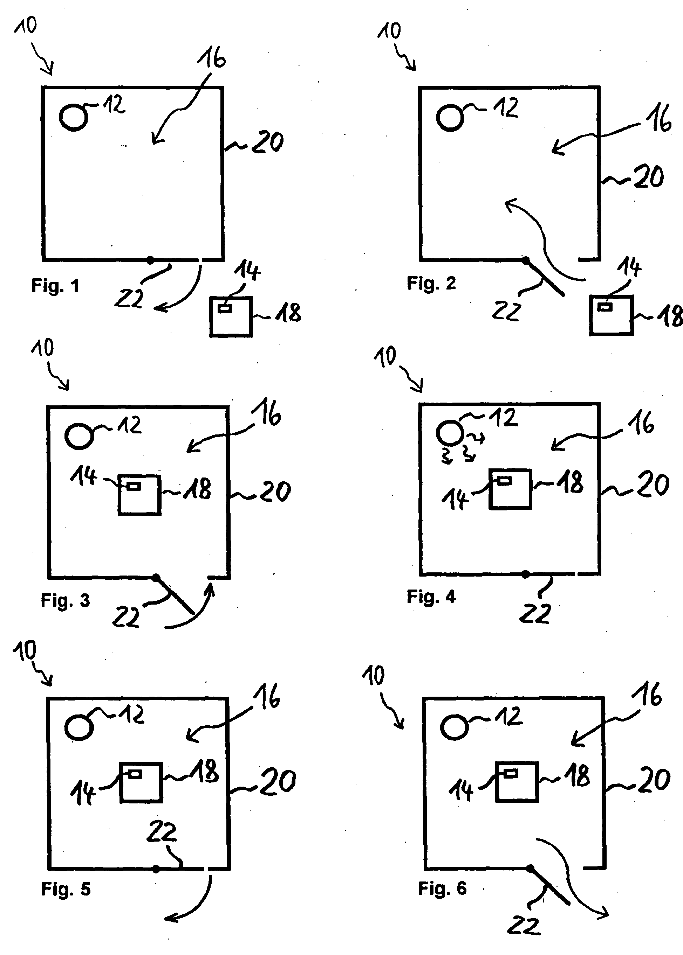

Die Fig. 1 bis 6 veranschaulichen den Ablauf eines RFID-Verfahrens unter Verwendung eines RFID-Systems 10 mit einem Lesegerät 12 zum Identifizieren von Transpondern, die sich in einem räumlichen Erfassungsbereich 16 des Lesegeräts 12 befinden.

Der Einfachheit der Darstellung halber ist in den Figuren lediglich ein solcher Transponder 14 symbolisiert, bei dem es sich z. B. um ein Identifikationsetikett auf der Verpackung einer Ware 18 handelt.

Eine Besonderheit des Systems 10 besteht darin, dass der Erfassungsbereich 16 durch eine Abschirmung 20 begrenzt ist, die im dargestellten Ausführungsbeispiel die Seitenwände eines insgesamt etwa quaderförmigen Erfassungsbereichs 16 bildet und somit den Erfassungsbereich 16 größtenteils umgibt. Abweichend davon könnte die Abschirmung 20 den Erfassungsbereich 16 auch z. B. vollständig umgeben, etwa indem auch oben und unten Abschirmkomponenten vorgesehen werden.

Ein den Erfassungsbereich 16 seitlich begrenzender Teil der Abschirmung 20 ist als eine Türe 22 ausgebildet, welche zum Einbringen und Ausbringen der mit Transpondern 14 versehenen Waren 18 in den Erfassungsbereich 16 und wieder heraus dient.

Fig. 1 zeigt die Situation vor Beginn des eigentlichen Identifikationsprozesses. Die zu identifizierende Ware 18 befindet sich außerhalb des Erfassungsbereichs 16. Sodann wird die Türe 22 geöffnet und die Ware 18 in den Erfassungsbereich 16 verbracht, wie in Fig. 2 dargestellt.

Wenngleich in den Fig. 1 bis 6 lediglich eine Ware 18 dargestellt ist, so handelt es sich in der Praxis tatsächlich um eine größere Anzahl von Waren, etwa einen gefüllten Einkaufswagen, einen großen Karton mit einer Vielzahl von darin befindlichen Artikeln, eine Palette von Waren etc.

Sodann wird die Türe 22 geschlossen (Fig. 3) und die eigentliche RFID durchgeführt (Fig. 4).

Die dargestellte RFID erfolgt unter Verwendung des Lesegeräts 12, welches in einem vorbestimmten Frequenzbereich (hier: UHF) elektromagnetische Strahlung gemäß eines RFID-Standards aussendet. Das Lesegerät 12 ist hierfür mit einer oder mehreren entsprechenden Antennen versehen. Die elektromagnetische Strahlung wird im Fernfeld von einer Antenne des Transponders 14 empfangen. Wie von herkömmlichen RFID-Systemen an sich bekannt, wird durch einen im Bereich der Transponderantenne induzierten Strom ein Mikrochip des Transponders 14 aktiviert und gleichzeitig ein Kondensator aufgeladen, welcher für eine temporäre Stromversorgung des Mikrochips sorgt. Sodann ist der Transponder 14 z. B. in der Lage, Befehle vom Lesegerät 12 zu empfangen und zu verarbeiten. Noch während der Bestrahlung des Transponders 14, oder danach in einer "Funkpause", erfolgt eine Datenübertragung vom Transponder 14 zum Lesegerät 12. Auch diese Datenübertragung in umgekehrter Richtung findet mittels der elektromagnetischen Kopplung statt, wofür es in der Praxis eine Vielzahl von Möglichkeiten gibt. Eine weit verbreitete Methode ist z. B. die so genannte "Lastmodulation", bei welcher der Transponder 14 seine Identifikation (und gegebenenfalls weitere Daten) nicht durch eine eigene Abstrahlung übermittelt sondern lediglich in modulierter Weise mehr oder weniger Energie des elektromagnetischen Feldes verbraucht, was wiederum von dem Lesegerät 12 detektiert wird.

In dieser Situation ist es sehr vorteilhaft, dass auf Grund der Abschirmung 20 das Auslesen der Daten aus den einzelnen Transpondern 14 nicht durch Umgebungseinflüsse gestört wird und der Auslesevorgang somit sehr zuverlässig ist. Auch ist jegliche Form der Datenverschlüsselung entbehrlich, da die Abschirmung 20 auch einen "Lauschangriff" von außen verhindert. Ferner ist die dargestellte RFID vorteilhaft praktisch unabhängig von gesetzlichen Einschränkungen hinsichtlich der verwendeten Betriebsfrequenz und Strahlungsleistung, insbesondere für den Fall einer im Wesentlichen vollständigen Absorption der Strahlungsleistung durch die Abschirmung 20 bzw. innerhalb des davon begrenzten Erfassungsbereichs.

Mit der beschriebenen Konstruktion kann z. B. ein Abschirmkäfig für eine LKW-Laderampe mit Abmessungen (Höhe, Breite, Tiefe) jeweils im Bereich einiger Meter gebildet werden.

Sobald der eigentliche Identifikationsprozess gemäß Fig. 4 abgeschlossen ist, wird die Türe 22 wieder geöffnet (Fig. 5) und die Ware 18 aus dem Erfassungsbereich 16 herausgenommen (Fig. 6).

Die Verwendung der Abschirmung 20 ermöglicht einen störungsfreien Betrieb im Hinblick auf etwaige externe Störquellen wie z. B. Elektromotoren (z. B. in Gabelstaplern, Ventilatoren, Bohrmaschinen etc.), Leuchtstoffröhren, Bewegungsmeldern etc. Ganz allgemein sind hier elektrische und elektronische Geräte problematisch, die nicht über eine entsprechende Abschirmung verfügen und im Betrieb elektromagnetische Strahlung emittieren. Derartige Störquellen emittieren oftmals über einen sehr großen Frequenzbereich. Erschwerend kommt hinzu, dass deren Störaktivität sich oftmals nicht vorhersagen lässt, man also über einen Arbeitstag verteilt mit zufälligen Störungen aus unterschiedlichen Quellen rechnen muss.

Im Sinne von funktechnischen gesetzlichen Vorschriften werden RFID-Geräte oftmals als kurzreichweitige Geräte ("short range devices" (SRD)) klassifiziert und für einen oder mehrere ganz bestimmte Frequenzbereiche zugelassen. Wenn das RFID-System 10 in einem dieser gesetzlich zugelassenen Frequenzbereiche arbeitet, so besteht in der Praxis die Gefahr, dass die Umgebung des Systems eine Vielzahl von Drahtlosanwendungen enthält, denen die gleiche Frequenz zugewiesen ist. Bei diesen Geräten kann es sich z. B. Funkthermometer, Handfunkgeräte, drahtlose Kopfhörer etc. handeln. Durch die Abschirmung 20 wird jedoch auch die potenzielle Störung durch solche Funkgeräte vermieden.

Dasselbe gilt für gezielte Sabotageangriffe mittels Störsendern von außen. Beispielsweise wäre es denkbar, dass ein ganzes Logistikzentrum durch gezielte Bestrahlung mit einem Störsender von außen, der noch nicht einmal geltende Funkvorschriften verletzen muss, lahm gelegt werden soll. Auch diese Gefahr ist durch die Verwendung der Abschirmung 20 gebannt.

Ein weiterer Vorteil besteht darin, dass der Betrieb des RFID-Systems 10 letztlich unabhängig von gesetzlichen Vorschriften betreffend Funkwellenlängen und Strahlungsleistungen betrieben werden kann, so dass im Einzelfall die Zuverlässigkeit des Identifizierungsprozesses beispielsweise noch weiter dadurch erhöht werden kann, dass ein Sender (z. B. im Lesegerät 12 integriert) für eine Strahlungsleistung ausgelegt ist, die so groß bemessen ist, dass der Betrieb des Systems ohne die Abschirmung 20 gesetzlich untersagt wäre.

Für den UHF-Bereich existieren als Regulativen in vielen Ländern beispielsweise ISO 18000-6a/b/c, ETSI EN 302 208 und ETSI EN 300 220, EPCglobal Class 1 Generation 2 etc. Allerdings gibt es, z. B. für RFID im Frequenzband von 865 bis 869,5 MHz, keineswegs weltweit einheitliche Normen. So sind die in westlichen Ländern gültigen Normen von Ländern des asiatisch-pazifischen-Raums, insbesondere China, noch nicht übernommen. Vorteilhaft können mit der vorliegenden Erfindung RFID-Systeme praktisch unabhängig von der Gesetzeslage weltweit eingesetzt werden.

Ein weiterer Vorteil des RFID-Systems 10 besteht darin, dass Interferenzen beim simultanen Betrieb mehrerer RFID-Lesegeräte bzw. mehrerer RFID-Systeme in enger räumlicher Nachbarschaft nicht mehr wie bisher zu folgenden typischen Problemen führen: Reduzierung der Leserate (gelesene Transponder pro Sekunde), Fehllesungen z. B. aus benachbarten Bereichen und somit Einschränkung der Zuverlässigkeit, Reduzierung der Lesegenauigkeit, z. B. beim schnellen Transport von Waren oder Gütern auf Förderbändern etc. Dadurch ergaben sich bisher für den Betrieb in der Praxis signifikante Einschränkungen, die sich auf den produktiven Betrieb sehr nachteilig auswirken.

Die vorstehend erläuterten Vorteile des Systems 10 setzen lediglich voraus, dass elektromagnetische Strahlungsleistung im betreffenden Frequenz- bzw. Wellenlängenbereich beim Eintritt in den Erfassungsbereich 16 bzw. beim Austritt aus dem Erfassungsbereich 16 mehr oder weniger stark gedämpft wird.

Bei einer erfindungsgemäßen RFID-Systemanordnung beträgt diese Dämpfung der jeweiligen RFID-Sendeleistungen mindestens 60 %, weiter bevorzugt mindestens 80 %.

Die Vorteile sind jedoch im Wesentlichen unabhängig von dem Umstand, ob die Wirkung der Abschirmung 20 nennenswert oder sogar größtenteils auf einer Reflektion der elektromagnetischen Strahlung beruht oder nicht. Anschaulich ausgedrückt spielt es keine Rolle, ob Störstrahlung von außen im Bereich der Abschirmung 20 absorbiert oder reflektiert wird.

Eine Reflektion der im Inneren des Erfassungsbereiches 16 erzeugten RFID-Betriebsstrahlung an der Abschirmung 20 beeinflusst den RFID-Identifikationsprozess jedoch erheblich und ermöglicht einige weitere überraschende Vorteile bei der Verwendung einer Abschirmung, die im Betriebswellenlängenbereich nennenswert reflektiert.

Ein erster Vorteil einer reflektierenden Abschirmung bzw. Abschirmungskomponente (z. B. Seitenwand) besteht darin, dass ansonsten "tote Winkel" innerhalb des Erfassungsbereichs 16 mit Betriebsstrahlungsleistung versorgt werden können, indem Strahlung gezielt zu diesen Bereichen hin reflektiert wird.

Ein weiterer Vorteil, der sich insbesondere für eine Abschirmung 20 ergibt, welche den Erfassungsbereich 16 größtenteils umgibt, besteht darin, dass durch das Reflektionsvermögen der Abschirmung die Strahlungsenergiedichte im Erfassungsbereich 16 nennenswert erhöht werden kann (Dieser Effekt wird in ähnlicher Weise z. B. bei Laserresonatoren genutzt bzw. ist dort zwingend für die Funktion des Lasers ("confining")). Bei der vorliegenden Erfindung kann durch diesen Effekt z. B. bei vorgegebener RFID-Strahlungsleistung der räumliche Erfassungsbereich beträchtlich vergrößert werden. Alternativ kann der Effekt bei vorgegebener Größe des Erfassungsbereiches dazu genutzt werden, die RFID-Strahlungsleistung zu verringern. Diese Überlegungen gelten gleichermaßen für die Energie- bzw. Datenübertragung von einem RFID-Sender zu den Transpondern und von den Transpondern zum Lesegerät. Bei einer erfindungsgemäßen RFID-Systemanordnung ist vorgesehen, dass Strahlungsleistung im jeweiligen Wellenlängenbereich durch deren Reflektion innerhalb des Erfassungsbereiches nennenswert in der Energiedichte überhöht wird.

Bei der nachfolgenden Beschreibung von weiteren Ausführungsbeispielen werden für gleichwirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen.

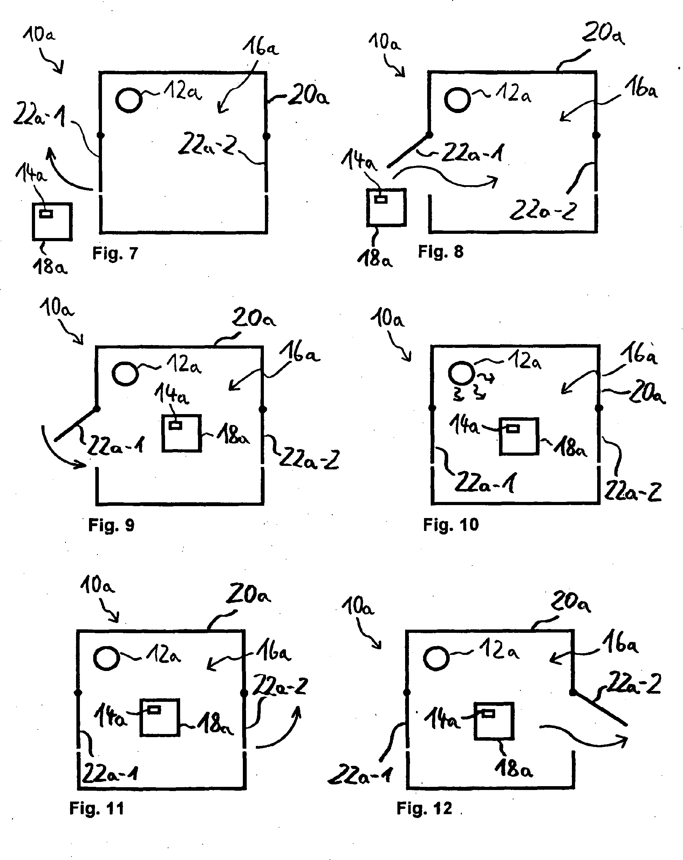

Die Fig. 7 bis 12 zeigen ein zweites Ausführungsbeispiel eines RFID-Systems 10a.

Im Unterschied zu der oben mit Bezug auf die Fig. 1 bis 6 beschriebenen Ausführungsform sind zwei einander entgegengesetzte Teile einer Abschirmung 20a jeweils als eine Türe 22a-1 bzw. 22a-2 ausgebildet.

Mit Transpondern 14a versehene Waren 18a werden durch die Türe 22a-1 in einen Erfassungsbereich 16a eingebracht (Fig. 8) und nach dem eigentlichen Identifikationsprozess durch die Türe 22a-2 ausgebracht (Fig. 12). Ansonsten läuft das RFID-Verfahren wie bei dem oben mit Bezug auf die Fig. 1 bis 6 beschriebenen System ab.

Diese Ausführungsform eignet sich z. B. besonders gut zur Verwendung bei der Kontrolle von Materialflüssen im Handel oder der Produktion, z. B. für einen Wareneingang bzw. Warenausgang.

Die beschriebenen Türen 22a-1 und 22a-2 sind selbstverständlich nur beispielhaft zu betrachten und können je nach Anwendungsfall auch z. B. durch Schwingtüren, Rolltoreinrichtungen, Metalldraht- oder Metallseilvorhänge etc. ersetzt werden.

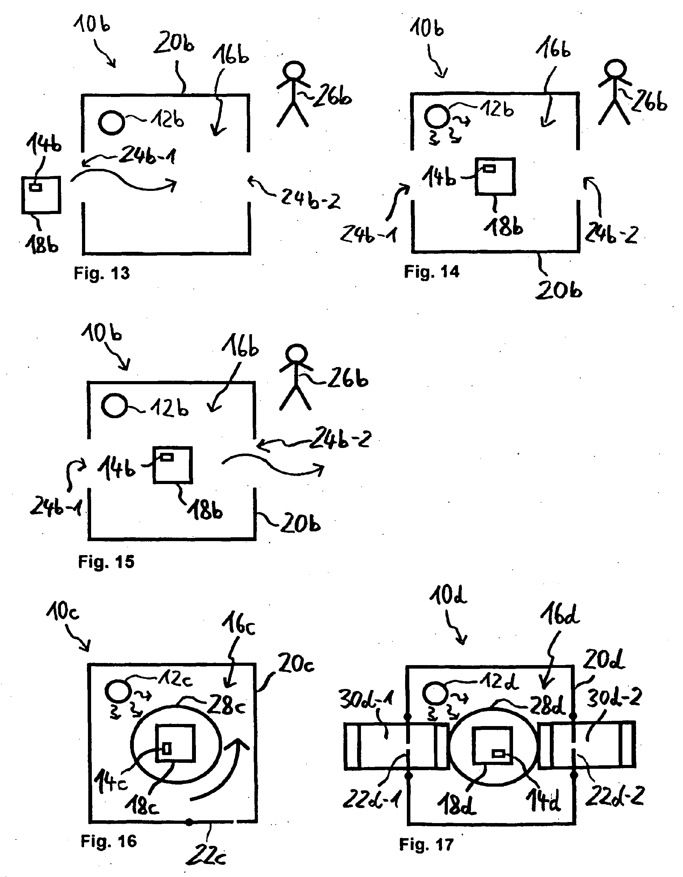

Die Fig. 13 bis 15 zeigen ein drittes Ausführungsbeispiel eines RFID-Systems 10b, welches ähnlich dem zuvor beschriebenen System 10a arbeitet.

Bei diesem Ausführungsbeispiel wird jedoch auf torartige Abschirmungskomponenten zum Einschleusen und Ausschleusen der betreffenden Gegenstände bzw. Waren verzichtet. Stattdessen besitzt eine Abschirmung 20b Durchgangsöffnungen (Aussparungen) 24b-1 und 24b-2 zum Einbringen bzw. Ausbringen von Waren 18b.

Fig. 13 zeigt die Situation beim Einbringen einer mit einem Transponder 14b versehenen Ware 18b in einen Erfassungsbereich 16b, Fig. 14 die Situation während des eigentlichen Identifikationsprozesses und Fig. 15 die Situation beim Ausschleusen der Ware 18b.

In den Fig. 13 bis 15 ist auch ein für alle beschriebenen Ausführungsbeispiele vorteilhafter weiterer Aspekt veranschaulicht. Dieser besteht darin, dass Personal bzw. Bedienungspersonen wie die dargestellte Person 26b durch die verwendete Abschirmung (20b in den Fig. 13 bis 15) vor einer Strahlenbelastung geschützt wird, welche von dem System 10b ausgeht. Dieser Aspekt besitzt somit Bedeutung im Zusammenhang mit dem Arbeitsschutz. Als typisches Beispiel stelle man sich einen Wareneingang oder Warenausgang vor, bei welchem Arbeiter LKWs entladen bzw. beladen und an einer Laderampe einzelne Paletten an RFID-Lesegeräten vorbeigezogen werden, um hierbei alle RFID-Transponder automatisch zu erfassen. Dies führt dazu, dass die Arbeiter permanent einer elektromagnetischen Bestrahlung ausgesetzt sind. Dies ist unproblematisch, solange die Strahlungsleistung des Systems entsprechend gering (und konform mit gesetzlichen Vorschriften) bemessen ist. Im Rahmen der vorliegenden Erfindung ist es jedoch gerade ein interessanter Aspekt, die für die Erfassung zur Verfügung stehende Strahlungsleistung nennenswert zu erhöhen, nämlich durch eine relativ hohe Sendeleistung und durch ein zur Überhöhung der RFID-Strahlungsenergiedichte geeignetes Reflektionsvermögen der Abschirmung. Durch die Verwendung der Abschirmung kann außerdem vorteilhaft eine Strahlungsbelastung für Personal drastisch reduziert werden, im Prinzip sogar weit unter die Belastung eines herkömmlichen RFID-Systems, selbst wenn das einzelne System der erfindungsgemäßen Systemanordnung mit weit höherer Strahlungsleistung arbeitet.

Auch im Zusammenhang mit dem erläuterten Arbeitsschutz ist für alle Ausführungsformen eine Weiterbildung interessant, bei welcher die Anwesenheit von mit den Transpondern versehenen Gegenständen (z. B. Waren) im Erfassungsbereich bzw. das Einbringen solcher Gegenstände in den Erfassungsbereich detektiert wird (unabhängig von der RFID-Erfassung), um z. B. das RFID-System zu aktivieren (die Sendeleistung einzuschalten), torartige Abschirmungskomponenten zu schließen, die Anwesenheit der Gegenstände akustisch und/oder optisch zu signalisieren etc. Dies kann in vielfältiger Weise durch eine geeignete Sensorik bewerkstelligt werden. Auch das Ausbringen von Gegenständen wie z. B. gefüllten Warenpaletten aus dem Erfassungsbereich kann in dieser Weise detektiert und signalisiert und/oder zur Auslösung von bestimmten Vorgängen genutzt werden.

Fig. 16 zeigt ein viertes Ausführungsbeispiel eines RFID-Systems 10c, welches ähnlich dem mit Bezug auf die Fig. 1 bis 6 beschriebenen Beispiel funktioniert.

Eine Besonderheit besteht jedoch darin, dass innerhalb des von einer Abschirmung 20c umgrenzten Erfassungsbereichs 16c eine Positioniereinrichtung, hier in Form eines Drehtellers 28c vorgesehen ist, welche dazu dient, auf dem Drehteller befindliche zu identifizierende Gegenstände während des eigentlichen RFID-Erfassungsvorganges in verschiedene Positionen und/oder Orientierungen zu bringen. Die Drehscheibe 28c kann vorteilhaft in die Abschirmungskonstruktion integriert werden und/oder mit Hilfe von Sensoren automatisch angesteuert werden.

Mit dem dargestellten Drehteller 28c kann während des Identifikationsprozesses z. B. eine darauf befindliche Ware 18c ein- oder mehrmals um 360° gedreht werden (vgl. Pfeil). Dies trägt dem Umstand Rechnung, dass abhängig von den Materialien und geometrischen Anordnungsverhältnissen der betreffenden Waren bzw. Warenverpackungen oftmals "funktechnisch abgeschattete Bereiche" existieren, so dass die zuverlässige Erfassung sämtlicher Transponder einer Warenlieferung erschwert wird. Eine schrittweise und/oder kontinuierliche Drehung der betreffenden Gegenstände (z. B. einer Palette mit einigen hundert metallischen Konservendosen) schafft hier Abhilfe.

Alternativ oder zusätzlich zu einer Drehung der mit den Transpondern versehenen Gegenstände kommt auch eine Verkippung und/oder eine translatorische Positionsänderung bzw. Bewegung in Betracht. Der in Fig. 16 symbolisierte Drehteller 28c könnte daher z. B. auch als Hub/Dreh-Teller ausgebildet sein.

Fig. 17 zeigt ein fünftes Ausführungsbeispiel eines RFID-Systems 10d, bei welchem ähnlich dem Beispiel gemäß Fig. 16 wieder eine Positioniereinrichtung 28d vorgesehen ist. Das System 10d besitzt jedoch ähnlich dem Beispiel gemäß der Fig. 7 bis 12 einander entgegengesetzte, jeweils entweder zum Einbringen oder zum Ausbringen der Gegenstände 18d vorgesehene Türen 22d-1 bzw. 22d-2. Diese Türen sind als zweiflügelige Schwingtüren ausgebildet und werden durch Federkraft in Schließstellung gehalten und unter Überwindung der Federkraft durch die passierenden Gegenstände 18d selbst aufgestoßen.

Eine weitere Besonderheit des Systems 10d besteht darin, dass durch eingangsseitige und ausgangsseitige Förderbänder 30d-1 und 30d-2 das Einbringen und Ausbringen der Gegenstände 18d automatisiert erfolgt. Im Betrieb des Systems 10d können z. B. Paletten auf das Förderband 30d-1 gestellt, automatisch in den Erfassungsbereich 16d transportiert, alle Transponder 14d erfasst (während einer Rotation der Drehscheibe 28d), um danach auf der entgegengesetzten Seite wieder aus dem Erfassungsbereich 16d herausbefördert zu werden.

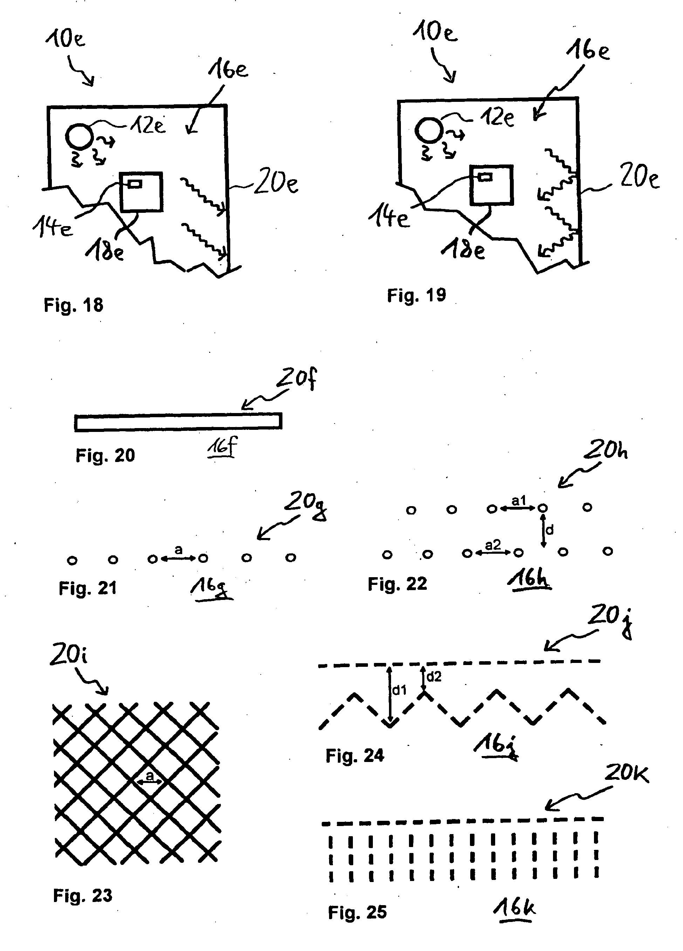

Die Fig. 18 und 19 veranschaulichen nochmals den oben bereits erläuterten Unterschied einer Abschirmungswirkung hinsichtlich des Reflektionsvermögens der betreffenden Abschirmung. In den beiden Figuren dargestellt ist jeweils ein Bereich einer Abschirmung 20e eines RFID-Systems 10e. Fig. 18 veranschaulicht den Fall einer absorbierenden Abschirmung 20e, wohingegen in Fig. 19 eine reflektierende Abschirmwirkung der Abschirmung 20e dargestellt ist.

Die Fig. 20 bis 25 veranschaulichen verschiedene technische Realisierungen einer Abschirmung bzw. einer Abschirmungskomponente (z. B. flächig ausgedehntes Abschirmungsmodul). Diese Abschirmstrukturen können vorteilhaft bei allen beschriebenen Systembeispielen eingesetzt werden.

Fig. 20 veranschaulicht eine Abschirmung 20f in Form einer einfachen Metallplatte (z. B. Stahlblech). Abweichend von diesem Beispiel taugt z. B. auch eine dünne Metallfolie (z. B. Dicke kleiner als 0,2 mm), mit welcher eine Trägerplatte (z. B. aus Kunststoff) beschichtet ist, oder eine Abschirmplane, wie sie z. B. für EMV-Testaufbauten an sich bekannt ist.

Für die besonders interessanten RFID-Frequenzen in der Größenordnung einiger hundert MHz liegen die entsprechenden Wellenlängen in der Größenordnung von einigen Zentimetern bis etwa einem Meter. Unter Nutzung des Prinzips eines "Faraday-Käfigs" taugt daher als Abschirmung auch eine elektrisch leitfähige Gitter- bzw. Netzstruktur. Beispiele hierfür sind in den Fig. 21 bis 25 dargestellt. Abgesehen von den niedrigeren Beschaffungs- und Installationskosten sind solche Strukturen oftmals auch deshalb besonders vorteilhaft, weil man durch solche Strukturen "hindurchsehen kann".

Fig. 21 veranschaulicht eine Abschirmung 20g bestehend aus einer Reihe von einzelnen Metallprofilstäben. Die Metallstäbe sind äquidistant mit einem gegenseitigen Abstand a angeordnet, beispielsweise in einer Räumlichkeit vertikal von einem Raumboden bis zu einer Raumdecke. Bevorzug ist der für diese Abschirmungsstruktur "charakteristische Abstand", hier die lichte Weite zwischen den Metallstäben, um mindestens einen Faktor 2 kleiner als die Wellenlänge der abzuschirmenden elektromagnetischen Strahlung. Zur Erzielung einer möglichst guten Abschirmung sollte der charakteristische Gitter- bzw. Netzabstand um mindestens einen Faktor 5, noch besser um mindestens einen Faktor 10 kleiner als diese Wellenlänge bemessen sein.

Eine einfache Möglichkeit, die Abschirmung deutlich zu erhöhen, besteht in der Verwendung von zwei oder noch mehr hintereinander angeordneten Abschirmlagen. Ein Beispiel hierfür zeigt Fig. 22. Bei diesem Ausführungsbeispiel sind zwei Metallstablagen (jeweils entsprechend Fig. 21) mit einem Gitterabstand a1 bzw. a2 in einem Lagenabstand d angeordnet. Der Abstand d lässt sich (in Abhängigkeit von der betreffenden Wellenlänge) so variieren, dass entweder die absorbierende oder die reflektierende Abschirmwirkung maximiert wird. Die beiden charakteristischen Abstände a1, a2 in der Abschirmebene können gleich oder verschieden groß gewählt werden.

Fig. 23 zeigt eine Abschirmlage 20i bestehend aus einem einfachen Drahtgeflecht bzw. Maschendrahtzaun. Damit erhält man eine sehr kostengünstige Abschirmung.

Fig. 24 zeigt eine Abschirmung 20j bestehend aus zwei Abschirmlagen, die jeweils wieder als Gitter- bzw. Netzstruktur ausgebildet sind. Eine Besonderheit dieses Ausführungsbeispiels besteht darin, dass eine der beiden Lagen zick-zack-förmig angeordnet ist. Damit lässt sich z. B. eine erhöhte Absorptionswirkung erzielen, insbesondere wenn die Differenz der eingezeichneten Abstände d1, d2 in der Größenordnung der betreffenden Wellenlänge liegt.

Fig. 25 zeigt eine Abschirmung 20k, bei welcher abweichend von der Ausführung gemäß Fig. 24 die Zick-Zack-Lage durch eine Anordnung von elektrisch leitfähigen Dämpfungslamellen ersetzt ist, die jeweils quer zur Erstreckungsebene der Abschirmung 20k und äquidistant zueinander angeordnet sind.

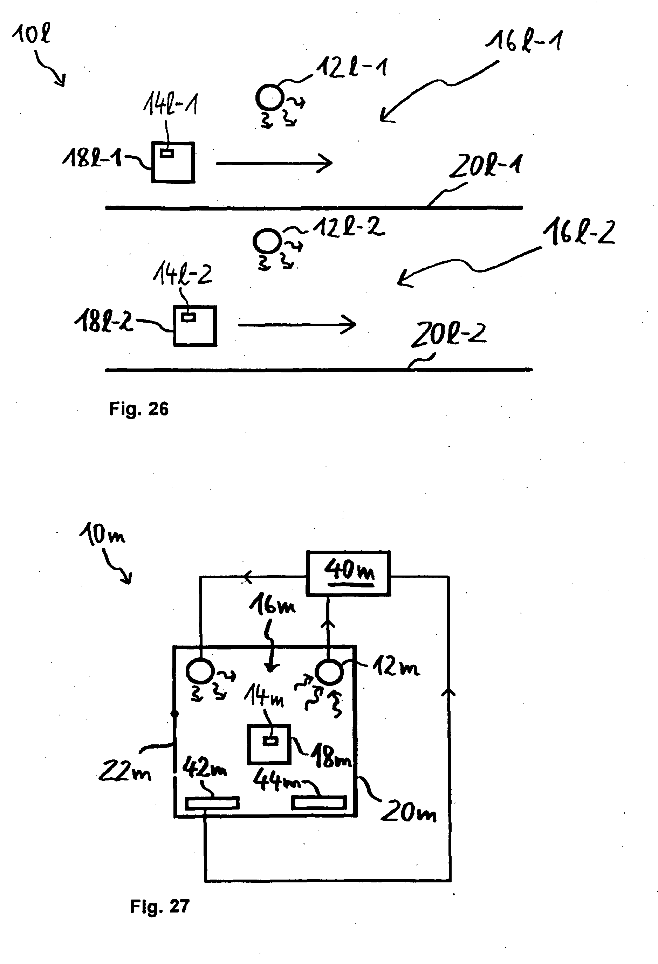

Fig. 26 zeigt ein weiteres Ausführungsbeispiel eines RFID-Systems 10l mit zwei Lesegeräten 12I-1 und 12I-2 zum Identifizieren von Transpondern 14I-1 bzw. 14I-2.

Die Lesegeräte 12I-1 und 12I-2 sind beispielsweise jeweils im Bereich einer Supermarkt-Kasse angeordnet und dienen dazu, die den jeweiligen Kassenbereich passierenden Waren 18I-1 bzw. 18I-2 zu identifizieren, wenn diese am jeweiligen Lesegerät vorbeigeführt werden (vgl. Pfeile in Fig. 26).

Ein Erfassungsbereich 16I-1 eines ersten Kassenbereiches wird durch eine Abschirmlage 20I-1, insbesondere z. B. eine Gitter- bzw. Netzstruktur der oben bereits erläuterten Art, in Richtung zu einem zweiten Kassenbereich hin begrenzt. Dieselbe Abschirmlage 20I-1 begrenzt den zweiten Kassenbereich bzw. Erfassungsbereich 16I-2 in gleicher Weise in Richtung zum ersten Kassenbereich hin. Eine weitere Begrenzung des Erfassungsbereiches 16I-2 wird durch eine zweite Abschirmlage 20I-2 gebildet.

Fig. 27 zeigt ein weiteres Ausführungsbeispiel eines RFID-Systems 10m mit einem Lesegerät 12m zum Identifizieren von Transpondern 14m in einem räumlichen Erfassungsbereich 16m.

Bei diesem Beispiel ist ein RFID-Sender nicht im Lesegerät 12m integriert sondern als separater UHF-Sender 13m vorgesehen. Sowohl der Sender 13m als auch das eigentliche Lesegerät 12m stehen in Kommunikationsverbindung mit einem Rechner 40m, welcher das System 12m in programmgesteuerter Weise kontrolliert.

Der Rechner 40m bewirkt beispielsweise das Einschalten und Ausschalten der RFID-Komponenten 12m, 13m, wobei im dargestellten Ausführungsbeispiel hierfür das Sensorsignal eines Sensors 42m genutzt wird, welcher die Anwesenheit von Ware im Erfassungsbereich 16m detektiert.

44m bezeichnet einen bei diesem Ausführungsbeispiel vorgesehenen Lastdipol zum Absorbieren von Strahlungsleistung. Derartige "Verbraucher" können abhängig von den konkreten geometrischen Verhältnissen z. B. vorteilhaft dazu eingesetzt werden, eine möglichst gleichmäßige Strahlungsverteilung innerhalb des Erfassungsbereiches zu erzielen.

Selbstverständlich lassen sich die einzelnen in Fig. 27 dargestellten Besonderheiten des Systems 10m vorteilhaft auch in Verbindung mit anderen Systemausführungen kombinieren, wie z. B. mit den oben bereits beschriebenen Systembeispielen.

Die obigen Ausführungsbeispiele veranschaulichen, dass mit der Erfindung eine vollständige RFID-Lösung zum störungsfreien Betrieb mittels einer lokalen Abschirmung geschaffen werden kann. Für alle Ausführungen ist es zumeist vorteilhaft, die betreffende Abschirmung modulartig aus Modulen gleicher oder verschiedener Größe zusammenzusetzen. Vorteilhaft können hierbei Funktionselemente des betreffenden Systems an oder in den Modulen integriert werden. (z. B. RFID-Sender, RFID-Lesegeräte, Sensoren, Lastdipole, elektrische Verkabelung etc.).

In besonders vorteilhaften Ausführungsformen wird eine Abschirmung mit einfachsten, insbesondere handelsüblichen Mitteln wie Maschendraht oder Profilstangen aus Metall realisiert. Modular aufgebaute Abschirmkäfige unterschiedlicher Größe können aus vorgefertigten Teilen aufgebaut werden. Darin lassen sich zusätzliche Elemente für einen automatisierten Produktionsbetrieb oder Materialfluss vorteilhaft integrieren.

Beispielsweise können in die Abschirmungskomponenten bereits Antennen für die RFID-Lesegeräte, je nach Bedarf in beliebiger Anzahl oder Ausführung, integriert werden. Besonders hervorzuheben ist die Möglichkeit, speziell auf die konkreten Gegebenheiten angepasste Antennen gleich serienmäßig einzubauen. Auch können Sensoren unterschiedlichster Art eingebaut oder bereits vorinstalliert (z. B. verkabelt) in plattenförmigen Abschirmkomponenten vorinstalliert werden. Bei den Sensoren kann es sich z. B. um Bewegungsmelder, Lichtschranken, Lichtvorhänge, Ultraschallsensoren, Temperatur- oder Radarsensoren handeln. Mittels der Sensoren kann beispielsweise die Antennenposition gesteuert werden, ein Lesegerät ein- und ausgeschaltet werden, ein als torartiger Abschirmbereich dienendes Falttor etc. geöffnet und geschlossen werden.

Der Arbeitsablauf des RFID-Verfahrens ist vorteilhaft so gestaltbar, dass das Personal sich während einer automatischen Pulkerfassung von Ware (z. B. beladene Paletten) außerhalb des Erfassungsbereichs (z. B. Käfigs) im strahlungsfreien Raum befindet. Somit können sehr strenge Anforderungen an den Arbeitsschutz eingehalten werden. Des weiteren sind Leseraten keinen Schwankungen durch äußere Einflüsse unterworfen.

## Patentansprüche

1. RFID-Systemanordnung, umfassend mehrere in enger räumlicher Nachbarschaft betriebene RFID-Systeme (10), wobei jedes der RFID-Systeme (10) ausgestattet ist mit:
- einem Lesegerät (12) zum Identifizieren von Transpondern (14), die sich in einem räumlichen Erfassungsbereich (16) des jeweiligen Lesegeräts (12) befinden, und
- einer den jeweiligen Erfassungsbereich (16) begrenzenden Abschirmung (20), wobei die RFID-Sendeleistung des Lesegeräts (12) wenigstens 5 W beträgt, jedoch beim Austritt aus dem Erfassungsbereich (16) durch die Abschirmung (20) um mindestens 60 %, insbesondere mindestens 80 % gedämpft wird,
und wobei durch ein Reflexionsvermögen der jeweiligen Abschirmung (20) die RFID-Strahlungsenergiedichte im jeweiligen Erfassungsbereich (16) im Vergleich zu einem Erfassungbereich ohne Abschirmung überhöht wird.

2. Systemanordnung nach Anspruch 1, wobei die Abschirmung (20) den Erfassungsbereich (16) größtenteils umgibt, insbesondere im Wesentlichen vollständig umgibt.

3. Systemanordnung nach einem der vorangehenden Ansprüche, wobei die Abschirmung (20) mehrere hintereinander angeordnete Abschirmlagen umfasst.

4. Systemanordnung nach einem der vorangehenden Ansprüche, wobei eine Strahlungsleistung des jeweiligen RFID-Systems (10) um mindestens einen Faktor 2, insbesondere 5, größer als die ohne die Abschirmung (20) am Ort des Betriebs der Systemanordnung gesetzlich zulässige Strahlungsleistung ist.

5. Systemanordnung nach einem der vorangehenden Ansprüche, wobei die Abschirmung (20) eine elektrisch leitfähige Gitter- bzw. Netzstruktur umfasst.

6. Systemanordnung nach Anspruch 5, wobei die Gitter- bzw. Netzstruktur Metallstangen und/oder gelochtes Metallblech und/oder Maschendraht und/oder Drahtgeflecht umfasst.

7. Systemanordnung nach Anspruch 5 oder 6, wobei ein charakteristischer Gitter- bzw. Netzabstand (a) um mindestens einen Faktor 2 kleiner als die Wellenlänge einer elektromagnetischen Strahlung des Systems bemessen ist.

8. Systemanordnung nach einem der vorangehenden Ansprüche, wobei die Abschirmung (20) mehrere hintereinander angeordnete Abschirmlagen umfasst deren gegenseitiger Abstand für eine konstruktive Interferenz der an den Abschirmlagen reflektierten Wellen geeignet ist.

9. Systemanordnung nach einem der vorangehenden Ansprüche, wobei wenigstens ein Teil der Abschirmung (20) als ein Tor (22) ausgebildet ist, welches in einer Öffnungsstellung ein Einbringen und Ausbringen von mit Transpondern (14) versehenen Gegenständen (18) gestattet und welches in einer Schließstellung abschirmt.

10. RFID-Verfahren zum Identifizieren von Transpondern (14), die sich in einem jeweiligen räumlichen Erfassungsbereich (16) eines jeweiligen Lesegeräts (12) von mehreren RFID-Systemen (10) befinden, welche in enger räumlicher Nachbarschaft betrieben werden, wobei der jeweilige Erfassungsbereich abgeschirmt wird, wobei das Lesegerät (12) mit einer RFID-Sendeleistung von wenigstens 5 W betrieben wird, diese Sendeleistung jedoch beim Austritt aus dem Erfassungsbereich (16) durch die Abschirmung (20) um mindestens 60 %, insbesondere mindestens 80 % gedämpft wird, und wobei durch ein Reflexionsvermögen der jeweiligen Abschirmung (20) die RFID-Strahlungsenergiedichte im jeweiligen Erfassungsbereich (16) im Vergleich zu einem Erfassungsbereich ohne Abschirmung überhöht wird.

11. Verfahren nach Anspruch 10, wobei der Erfassungsbereich (16) von der betreffenden Abschirmung (20) größtenteils, insbesondere im Wesentlichen vollständig, umgeben wird.

12. Verfahren nach Anspruch 10 oder 11, durchgeführt mit einer jeweiligen Strahlungsleistung, welche um mindestens einen Faktor 2, insbesondere 5, größer als die ohne die Verwendung der betreffenden Abschirmung (20) gesetzlich zulässige Strahlungsleistung ist.

13. Verfahren nach einem der Ansprüche 10 bis 12, wobei wenigstens ein Teil der jeweiligen Abschirmung (20) torartig zwischen einer Öffnungsstellung und einer Schließstellung bewegbar ist, mit Transpondern (14) versehene Gegenstände (18) in der Öffnungsstellung in den jeweiligen Erfassungbereich (16) eingebracht und/oder aus diesem ausgebracht werden, und in der Schließstellung die Identifizierung der Transponder (14) durchgeführt wird.

## Claims

1. An RFID system arrangement, comprising a plurality of RFID systems (10), which are operated in close vicinity, wherein each of the RFID systems (10) comprises:
- a reading unit (12) for the identification of transponders (14), which are located in a spatial registration field (16) of the respective reading unit (12), and
- a shielding (20) that bounds the respective registration field (16),
wherein the RFID transmission power output of the reading unit (12) is at least 5 W, but is damped by means of the shielding (20) by at least 60%, In particular by at least 80%, on exit from the registration field (16),
and wherein, as a result of a reflective capability of the respective shielding (20), the RFID radiation energy density in the respective registration field (16) is increased in comparison to a registration field without shielding.

2. The system arrangement according to Claim 1, wherein the shielding (20) surrounds the registration field (16) for the most part, in particular essentially completely.

3. The system arrangement according to any of the preceding claims, wherein the shielding (20) comprises a plurality of shielding layers arranged one behind another.

4. The system arrangement according to any of the preceding claims, wherein a radiation power output of the respective RFID system (10) is larger by at least a factor 2, In particular 5, than the legally permissible radiation power output without the shielding (20) at the place of operation of the system arrangement.

5. The system arrangement according to any of the preceding claims, wherein the shielding (20) comprises an electrically conducting lattice or mesh structure.

6. The system arrangement according to Claim 5, wherein the lattice or mesh structure comprises metal bars, perforated metal plates, wire netting and/or wire mesh.

7. The system arrangement according to Claim 5 or 6, wherein a characteristic lattice or mesh separation distance (a) is dimensioned to be at least a factor 2 smaller than the wavelength of an electromagnetic radiation of the system (10).

8. The system arrangement according to any of the preceding claims, wherein the shielding (20) comprises a plurality of shielding layers arranged one behind another, wherein a mutual separation distance of the shielding layers is dimensioned so that the waves reflected at the shielding layers can constructively interfere.

9. The system arrangement according to any of the preceding claims, wherein at least one part of the shielding (20) is designed as a gate (22), which in an open position permits the introduction and removal of objects (18) fitted with transponders (14), and which shields In a closed position.

10. An RFID method for the identification of transponders (14), which are located in a respective spatial registration field (16) of a respective reading unit (12) of a plurality of RFID systems (10), which are operated in close vicinity, wherein the respective registration field is shielded, wherein the reading unit (12) is operated with a RFID transmission power output of at least 5 W, but this transmission power output is damped by means of the shielding (20) by at least 60%, in particular by at least 80%, on exit from the registration field (16), and wherein, as a result of a reflective capability of the respective shielding (20), the RFID radiation energy density in the respective registration field (16) is increased in comparison to a registration field without shielding.

11. The method according to Claim 10, wherein the registration field (16) is surrounded by the respective shielding (20) for the most part, in particular essentially completely.

12. The method according to Claim 10 or 11, carried out with a respective radiation power output, which is larger by at least a factor 2, in particular 5, than the legally permissible radiation power output without the use of the respective shielding (20).

13. The method according to any of Claims 10 to 12, wherein at least a part of the respective shielding (20) can be moved in a gate-like manner between an open position and a closed position, wherein objects (18) fitted with transponders (14) are introduced Into the respective registration field (16) and/or removed from the respective registration field (16) in the open position, or both, and wherein in the closed position the identification of the transponders (14) is carried out.

## Revendications

1. Agencement de système RFID, comprenant plusieurs systèmes RFID (10) exploités dans un voisinage étroit dans l'espace, chacun des systèmes RFID (10) étant équipé :
- d'un lecteur (12) pour l'identification de transpondeurs (14), qui se trouvent dans une zone de détection (16) dans l'espace du lecteur (12) respectif, et
- d'un blindage (20) délimitant la zone de détection (16) respective,
la puissance d'émission RFID du lecteur (12) étant d'au moins 5 W, mais étant amortie, lors de la sortie de la zone de détection (16), par le blindage (20) d'au moins 60 %, en particulier d'au moins 80 %,
et la densité d'énergie de rayonnement RFID dans la zone de détection (16) respective étant augmentée par un pouvoir de réflexion du blindage (20) respectif par rapport à une zone de détection sans blindage.

2. Agencement de système selon la revendication 1, le blindage (20) entourant en majeure partie la zone de détection (16), l'entourant en particulier pratiquement complètement.

3. Agencement de système selon l'une des revendications précédentes, le blindage (20) comprenant plusieurs blindages disposés les uns derrière les autres.

4. Agencement de système selon l'une des revendications précédentes, une puissance de rayonnement du système RFID (10) respectif étant supérieure d'au moins un facteur 2, en particulier 5, à la puissance de rayonnement qui est légalement autorisée sans le blindage (20) à l'emplacement de l'utilisation de l'agencement de système.

5. Agencement de système selon l'une des revendications précédentes, le blindage (20) comprenant une structure de grille ou de réseau électriquement conductible.

6. Agencement de système selon la revendication 5, la structure de grille ou de réseau comprenant des barres de métal et/ou de la tôle métallique perforée et/ou du fil métallique en maille et/ou un treillis métallique.

7. Agencement de système selon la revendication 5 ou 6, une distance à la grille ou une distance au réseau (a) caractéristique étant inférieure d'au moins un facteur 2 par rapport à la longueur d'onde d'un rayonnement électromagnétique du système.

8. Agencement de système selon l'une des revendications précédentes, le blindage (20) comprenant plusieurs couches de blindage disposées les unes derrière les autres, dont l'espacement réciproque convient pour une interférence constructive des ondes réfléchies sur les couches de blindage.

9. Agencement de système selon l'une des revendications précédentes, au moins une partie du blindage (20) étant conçue comme une porte (22), qui permet dans une position d'ouverture une introduction et une évacuation d'objets (18) dotés de transpondeurs (14) et qui protège dans une position de fermeture.

10. Procédé RFID pour l'identification de transpondeurs (14), qui se trouvent dans une zone de détection (16) respective dans l'espace d'un lecteur (12) respectif de plusieurs systèmes RFID (10), qui sont exploités dans un voisinage étroit dans l'espace, la zone de détection respective étant blindée, le lecteur (12) étant utilisé avec une puissance d'émission RFID d'au moins 5 W, mais cette puissance d'émission étant amortie cependant, lors de la sortie de la zone de détection (16), par le blindage (20) d'au moins 60 %, en particulier d'au moins 80 %, et la densité d'énergie de rayonnement RFID dans la zone de détection (16) respective étant augmentée par un pouvoir de réflexion du blindage (20) respectif par rapport à une zone de détection sans blindage.

11. Procédé selon la revendication 10, la zone de détection (16) étant entourée en majeure partie, en particulier pratiquement complètement, par le blindage (20) concerné.

12. Procédé selon la revendication 10 ou 11, mis en oeuvre avec une puissance de rayonnement respective, qui est supérieure d'au moins un facteur 2, en particulier 5, à la puissance de rayonnement légalement autorisée sans l'utilisation du blindage (20) concerné.

13. Procédé selon l'une des revendications 10 à 12, au moins une partie du blindage (20) respectif pouvant être déplacée à la façon d'une porte entre une position d'ouverture et une position de fermeture, des objets (18) dotés de transpondeurs (14) étant introduits dans la zone de détection (16) respective dans la position d'ouverture et/ou étant sortis de cette zone, et l'identification du transpondeur (14) étant effectuée dans la position de fermeture.
